# EUROPÄISCHE PATENTSCHRIFT

(11) **EP 0 668 816 B1**
(45) Veröffentlichungstag und Bekanntmachung des Hinweises auf die Patenterteilung: **18.03.1998**
(21) Anmeldenummer: 93921799.8
(22) Anmeldetag: 07.10.1993
(51) Int. Cl.: B29C 45/14, F16K 27/02, F02D 9/10

(54) **AUS KUNSTSTOFF BESTEHENDER FORMKÖRPER**
SHAPED ARTICLE MADE OF PLASTIC
CORPS MOULE EN MATIERE PLASTIQUE

(30) Priorität: 14.07.1993 AT 1391/93
(43) Veröffentlichungstag der Anmeldung: 30.08.1995
(73) Patentinhaber: ROBERT BOSCH GMBH, 70442 Stuttgart (DE)
(72) Erfinder: PETERS, Klaus-Jürgen, D-71563 Affalterbach (DE); GMELIN, Karl, D-74223 Flein (DE); ENTENMANN, Matthias, D-74321 Bietigheim-Bissingen (DE); ROPERTZ, Peter, D-71706 Markgroeningen (DE); POLLMANN, Herbert, A-3822 Karlstein (AT); HODULIK, Wolfgang, A-3822 Karlstein (AT)
(86) Internationale Anmeldenummer: DE9300948
(87) Internationale Veröffentlichungsnummer: WO9502493

(56) Entgegenhaltungen:
- EP-A- 0 024 209
- EP-A- 0 109 792
- GB-A- 2 008 227
- US-A- 4 774 750

## Beschreibung

Die Erfindung betrifft einen aus Kunststoff bestehenden, insbesondere im Spritzgußverfahren hergestellten Formkörper, beispielsweise ein Drosselklappengehäuse, mit einer Wandung, die mit einer Innenwandfläche einen Hohlraum begrenzt, gemäß dem Oberbegriff des Patentanspruchs 1.

Bei vielen Formkörpern besteht die Forderung, daß die Innenwandfläche des Hohlraums maßhaltig sein muß, d.h., sich ihre Form und ihre Abmessungen nicht verändern dürfen. Dies ist beispielsweise dann notwenig, wenn der wirksame Durchflußquerschnitt dieses Hohlraumes durch ein darin befindliches Drosselorgan veränderbar sein soll. Beispielsweise ist das bei Drosselklappen der Fall, wie sie in Luftansaugrohren von Brennkraftmaschinen in Kraftfahrzeugen verwendet werden. Dort ist in dem einen kreisförmigen Querschnitt aufweisenden Hohlraum, der einen Teil des Luftansaugrohres bildet, ein scheibenförmiges Drosselorgan um eine Drosselklappenwelle schwenkbar gelagert, durch dessen Verschwenkung der Durchflußquerschnitt des Luftsansaugrohres von einem Maximum bis zur vollständigen Absperrung verändert werden kann.

Man hat daher bereits vorgeschlagen, das Drosselklappengehäuse aus Kunststoff, und zwar im Spritzgußverfahren herzustellen. Derartige aus Kunststoff bestehende Drosselklappengehäuse weisen den Vorteil auf, daß sie leichter sind als Aluminiumgehäuse, daß das Herstellungsmaterial billiger ist und daß in beim Spritzgußvorgang mitgeformten Öffnungen Einsätze, beispielsweise mit Gewindebohrungen versehene Einsätze oder als Wälzlager für die Lagerung des Drosselorgans ausgebildete Einsätze eingepreßt werden können, so daß die Nachbearbeitung auf ein Minimum reduziert werden kann. Der Nachteil derartiger aus Kunststoff bestehender Drosselklappengehäuse besteht darin, daß sie während und nach dem Spritzgießen schrumpfen und sich nach dem Entformen verziehen und daß sie ferner eine schlechte Dimensionsstabilität unter Temperatur- und Krafteinwirkung besitzen. Hierbei muß berücksichtigt werden, daß der Motorraum eines Kraftfahrzeuges und daher auch das Drosselklappengehäuse großen Temperaturschwankungen unterworfen ist, da dort einerseits beim Abstellen des Kraftfahrzeuges im Winter im Freien hohe Minusgrade, andererseits beim Betrieb des Kraftfahrzeuges, insbesondere an heißen Sommertagen und nach dem Abstellen der Brennkraftmaschine, Temperaturen von über 120°C auftreten können. Eine Maßhaltigkeit der Innenfläche derartiger aus Kunststoff bestehender Drosselklappengehäuse ist aus diesen Gründen nicht gewährleistet. Eine solche Maßhaltigkeit ist aber notwendig, damit jede Stellung des verschwenkbaren Drosselorgans einem genau definierten Durchströmquerschnitt entspricht und vor allem damit ein minimaler, genau definierter Restspalt oder ein vollständiges Absperren in einer Endlage des Drosselorganes möglich ist. Aus Umweltschutzgründen und zur Verminderung des Brennstoffverbrauchs werden heute sehr geringe Leerlaufdrehzahlen der Brennkraftmaschine gefordert, wobei das Drosselorgan eine Leerlaufstellung einnimmt, in der nur eine geringe Luftmenge an dem Drosselorgan vorbeiströmen darf. Es ist deshalb besonders wichtig, daß die Innenwandfläche des Drosselklappengehäuses auch bei langem Betrieb über Jahre ihre Maßhaltigkeit besonders im Bereich der sog. Leerlaufstellung des Drosselorgans behält, um die geforderte geringe Spaltbreite um das Drosselorgan einstellen zu können. Nachteilig ist weiter, daß sich auch die Position und die Achsfluchtung der Lager für das Drosselorgan z.B. durch die Temperaturschwankungen verändert, was zu einem Verklemmen des Drosselorgans führen kann. Ein Verklemmen würde bei Verwendung in Kraftfahrzeugen bewirken, daß Motordrehzahl und Geschwindigkeit vom Fahrer nicht mehr beeinflußt werden können.

Um diese Nachteile zu vermeiden, hat man bereits vorgeschlagen, eine Innenwand des Drosselkappengehäuses zumindest in dem Bereich, in dem sich der Umfang des Drosselorgans bei entsprechender Schwenklage in unmittelbarer Nachbarschaft dieser Innenwand befindet, als ein Paßteil aus Metall auszubilden, dessen dem Drosselorgan zugewandte Oberfläche eine maßhaltige Paßfläche bildet. Ein Nachteil dieser Anordnung besteht darin, daß die Herstellung dieses Paßteiles teuer ist, vor allem deshalb, da die Paßfläche einer Feinbearbeitung unterzogen werden muß, und zwar entweder bevor dieser Paßteil mit dem aus Kunststoff bestehenden Drosselklappengehäuse verbunden wird oder nach diesem Vorgang. Außerdem weist ein solcher Paßteil ein großes Volumen auf.

Es ist auch bereits durch die US-A-4,774,750 ein aus Kunststoff bestehendes Drosselklappengehäuse bekannt, dessen Innenwandfläche mit einer Wandung einen Hohlraum begrenzt. In das Drosselklappengehäuse ist ein massiver metallener Kernkörper eingebettet, der mit einem kreisförmigen Abschnitt den Hohlraum umgibt und so dick ist, daß die im Hohlraum angeordnete Drosselklappe mit ihrer Drosselklappenwelle in dem Kernkörper gelagert ist.

Bekannt ist durch die EP-A-0 024 209 ebenfalls ein aus Kunststoff gebildeter Formkörper mit einer einen Hohlraum umgebenden Innenwandfläche, in dem eine Klappe drehbar gelagert ist. Der Formkörper ist außen von einem metallenen Rohrkörper umgeben, der auf die Maßänderungen der Innenwandfläche nur einen geringen Einfluß hat.

Die vorliegende Erfindung hat sich zur Aufgabe gestellt, die Nachteile der bekannten Konstruktionen zu vermeiden und einen aus Kunststoff bestehenden Formkörper, beispielsweise ein Drosselklappengehäuse, der eingangs beschriebenen Art zu schaffen, der bzw. das einfach und billig herstellbar ist und dessen Innenwandfläche die erforderliche Maßhaltigkeit aufweist.

Zur Lösung dieser Aufgabe schlägt die Erfindung gemäß dem Kennzeichenteil des Patentanspruchs 1 vor, daß in der Wandung ein zumindest an der dem Hohlraum zugewandten Innenwandfläche vom Kunststoffmaterial bedecktes metallenes Einlegeteil aus Blech in besonderer Weise angeordnet ist. Da dieses Einlegeteil an der der Innenwandfläche zugewandten Seite vom Kunststoffmaterial bedeckt ist, bildet dieses Einlegeteil kein Paßteil, es ist somit nicht notwendig, dieses Einlegeteil einer maßgenauen Bearbeitung zu unterziehen. Die mit dem Drosselorgan zusammenwirkende und als Paßfläche dienende Innenwandfläche wird vielmehr vom Kunststoffmaterial gebildet und ist bei Verwendung eines geeigneten Materials bereits nach dem Entformen des Formkörpers aus der Spritzgußform vorhanden, so daß die diese Paßfläche bildende Innenwandfläche keiner weiteren Bearbeitung bedarf.

Es hat sich gezeigt, daß das Einlegeteil eine Art Armierung des Kunststoffes bildet, die nicht nur ein Schrumpfen und Verziehen des Kunststoffmaterials nach dem Entformen verhindert, sondern auch eine große Temperaturbeständigkeit dieses Kunststoffmaterials gewährleistet.

Da das Einlegeteil zumindest an der dem Hohlraum zugewandten Seite, vorteilhafterweise allseits, vom Kunststoffmaterial bedeckt ist, ist eine genaue Bearbeitung dieses Einlegeteils bei der Herstellung desselben nicht erforderlich. Vorteilhafterweise ist dieses Einlegeteil aus einem Blech geformt, und zwar beispielsweise durch Stanzen im Folgeschnittverfahren, wodurch eine beliebige Formgebung des Einlegeteils erzielbar ist.

Die erfindungsgemäße Ausbildung ermöglicht es gemäß einer weiteren vorteilhaften Ausgestaltung der Erfindung, Abschnitte des aus Blech bestehenden Einlegeteils aus einer oberen oder unteren Blechebene herauszubiegen und durch diese herausgebogenen Abschnitte beispielsweise die Lagerstellen für das Drosselorgan oder sonstige Ansätze, über welche beispielsweise eine Verbindung mit anderen Teilen erfolgt, zu verstärken. Diese Abschnitte können von Ringteilen gebildet sein, die im Bereich von Öffnungen, insbesondere Lageröffnungen in das Kunststoffmaterial eingebettet sind, so daß sie das Kunststoffmaterial im Bereich dieser Lageröffnungen armieren bzw. verstärken.

Zweckmäßig ist das Einlegeteil mit Verformungen, insbesondere mit diesen durchsetzenden Öffnungen versehen, durch welche bei Herstellung des Formkörpers im Spritzgußverfahren der Kunststoff hindurchdringt, wodurch eine bessere Fixierung des Einlegeteiles im Kunststoffmaterial erzielt wird.

Gemäß einem weiteren Merkmal der Erfindung ist das Einlegeteil in vorteilhafterweise gleichfalls mit vom Kunststoffmaterial bedeckten Ansätzen versehen. Diese Ansätze können Öffnungen die beispielsweise als Gewindeöffnungen ausgebildet sind, über die mittels Schrauben eine Verbindung mit zusätzlichen Teilen erfolgen kann.

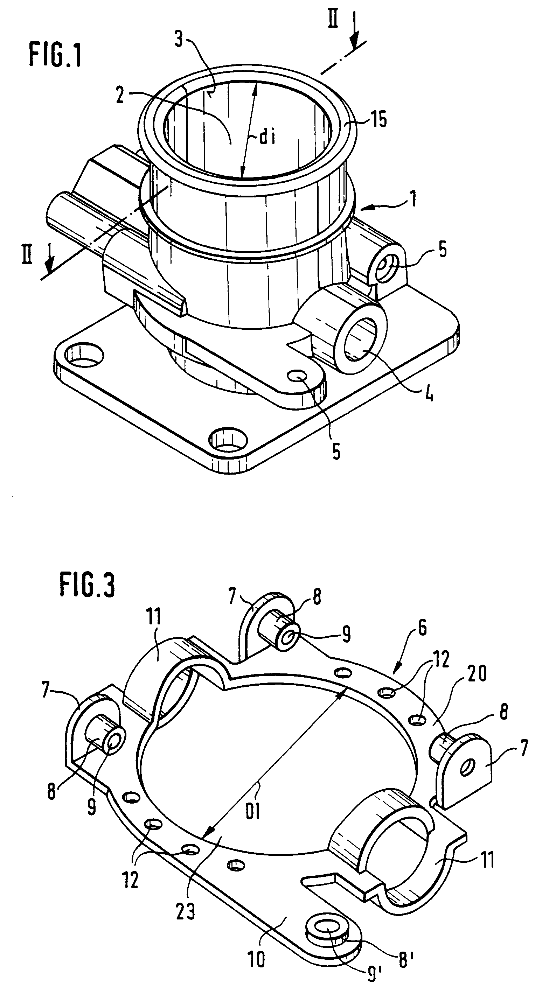

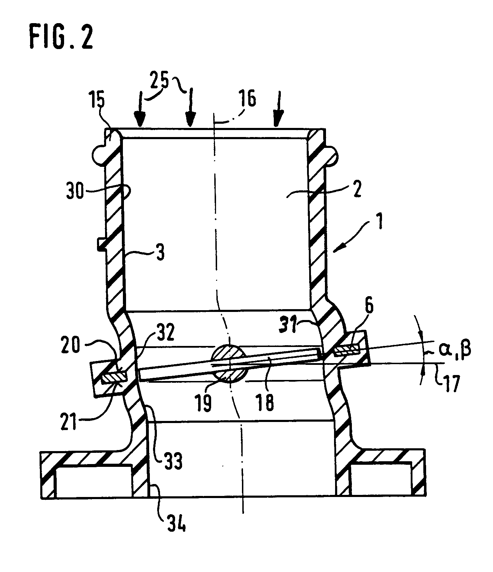

Ein Ausführungsbeispiel der Erfindung ist in der Zeichnung vereinfacht dargestellt und wird im folgenden näher beschrieben. Es zeigen Figur 1 ein erfindungsgemäß ausgebildetes Drosselklappengehäuse in perspektivischer Darstellung, Figur 2 einen Schnitt durch das Drosselklappengehäuse entlang der Linie II-II in Figur 1 und Figur 3 eine perspektivische Darstellung eines Einlegeteils.

Als Ausführungsbeispiel der Erfindung ist in den Figuren 1 und 2 ein Drosselklappengehäuse 1 in bekannter Form dargestellt, das aus Kunststoff besteht und im Spritzgußverfahren hergestellt ist. Dieses Drosselklappengehäuse 1 ist Teil eines Luftansaugrohres einer Brennkraftmaschine und weist einen Hohlraum 2 mit kreisförmigem Querschnitt auf, der sich entlang einer Längsachse 16 erstreckt und dessen vollständig aus Kunststoffmaterial gebildete Wandung 15 innen eine Innenwandfläche 3 hat, die die Paßfläche für ein Drosselorgan bildet, das beispielsweise als scheibenförmige Drosselklappe 18 ausgestaltet ist und zur Leistungssteuerung der Brennkraftmaschine dient. Die Drosselklappe 18 ist an einer Drosselklappenwelle 19 befestigt, die in nicht dargestellten Wälz- oder Gleitlagern gelagert ist, die in Lageröffnungen 4 des Drosselklappengehäuses 1 eingepreßt sind. Gewindeöffnungen 5 im Drosselklappengehäuse 1 dienen zur Befestigung zusätzlicher Bauteile am Drosselklappengehäuse.

In einer durch einen Pfeil 25 gekennzeichneten Luftströmungsrichtung gesehen, setzt sich der Hohlraum 2 zusammen aus einem zylindrischen Einströmabschnitt 30 mit kreisförmigem Querschnitt, einem sich daran anschließenden ersten Übergangsabschnitt 31, der ebenfalls kreisförmige Querschnitte aufweist, die jedoch entlang einer bogenförmig in Figur 2 nach rechts verschobenen Längsachse liegen, einem sich daran anschließenden zylindrischen Zwischenabschnitt 32 mit kreisförmigem Querschnitt, der in einen zweiten Übergangsabschnitt 33 übergeht, der ebenfalls kreisförmige Querschnitte aufweist, die jedoch entlang einer bogenförmig nach rechts verschobenen Längsachse liegen, und einem zylindrischen Abströmabschnitt 34 mit kreisförmigem Querschnitt. Die Drosselklappenwelle 19 erstreckt sich quer durch den Zwischenabschnitt 32, so daß die Drosselklappe 18 in ihrer Absperrstellung bei nicht laufender Brennkraftmaschine und auch in ihrer sogenannten Leerlaufstellung, in der die Brennkraftmaschine mit Leerlaufdrehzahl läuft und zwischen dem Umfang der Drosselklappe 18 und der Innenwandfläche 3 nur ein äußerst geringer Spalt für die Ansaugluft vorhanden immer gegenüber einer Normalebene 17 zur Längsachse 16 geneigt innerhalb des Zwischenabschnittes 32 liegt. Der Neigungswinkel α der Drosselklappe 18 gegenüber der Normalebene 17 beträgt in Leerlaufstellung in Abhängigkeit von der eingestellten Leerlaufdrehzahl und der verwendeten Brennkraftmaschine etwa zwischen 4° und 8°.

Wie aus Figur 2 hervorgeht, ist im Bereich der Wandung 15 etwa dort, wo die Wandung 15 den Zwischenabschnitt 32 umschließt und sich die Drosselklappe 18 in ihrer Absperrstellung und Leerlaufstellung befindet, ein ringförmiges Einlegeteil 6 in das Kunststoffmaterial eingebettet. Das Einlegeteil 6 ist zumindest zur Innenwandfläche 3 hin allseits vom Kunststoffmaterial bedeckt. Mit der Normalebene 17 zur Längsachse 16 des Hohlraums 2 schließt das Einlegeteil 6 insbesondere einen Winkel β zwischen etwa 4° und 8° ein. Eine besonders gute Maßgenauigkeit und Maßhaltigkeit der Innenwandfläche 3 hat sich dann ergeben, wenn das Einlegeteil 6 so unter einem Winkel β zur Normalebene 17 geneigt ist, daß es zu der sich in Leerlaufstellung befindlichen Drosselklappe 18 fluchtend verläuft, also die Winkel α und β gleich groß sind. Dabei können mit dem Einlegeteil 6 bereits Lager und Buchsen verbunden sein, die Öffnungen oder Gewindebohrungen aufweisen.

Das Einlegeteil 6, welches in Figur 3 in perspektivischer Darstellung gezeigt ist, besteht aus einem Metallblech und ist im Folgeschnittverfahren hergestellt, wobei auf eine besondere Formgenauigkeit und Oberflächenbearbeitung kein Wert gelegt werden muß, da dieses Einlegeteil 6 ohnedies insbesondere vollständig vom Kunststoffmaterial umgeben ist. Der Innendurchmesser Dᵢ einer Zentralöffnung 23 des ringförmigen Einlegeteils 6 ist größer als der Innendurchmesser dᵢ des von der Innnenwandfläche 3 begrenzten zylindrischen Hohlraums 2. Das Einlegeteil 6 durchsetzende Öffnungen 12 bewirken eine bessere Verankerung desselben im Kunststoffmaterial.

Die Figur 3 zeigt ebenfalls, daß das Einlegeteil 6 Abschnitte 7 aufweist, die aus einer oberen 20 und einer unteren Blechebene 21 herausgebogen und mit Durchzügen 8 versehen sind, die Positionieroffnungen 9 für die Verankerung in der Spritzgußform aufweisen und ähnliches. Ein sich entlang der Blechebenen 20, 21 erstreckender Ansatz 10 weist eine Hülse 8' mit einer Gewindeöffnung 9' auf. Aus den Blechebenen 20, 21 herausgebogen sind ebenfalls Ringteile 11, die teilschalenförmig im Bereich der Lageröffnungen 4 in das Kunststoffmaterial eingebettet sind und so einen dimensionsstabilen Käfig um die einzupressenden Lager bilden.

Das Einlegeteil 6 mit seinen Abschnitten 7 und Ansätzen 10 sowie seinen Ringteilen 11 bildet eine Art Armierung des Kunststoffmaterials und daher eine Verstärkung der aus dem Kunststoff bestehenden Wandteile an jenen Stellen, an denen eine Formstahilität dieses Kunststoffmaterials besonders wichtig ist, also ein Schrumpfen, Verziehen oder dgl. vor allem auch bei auftretenden Temperaturschwankungen verhindert werden soll. Dieses Einlegeteil 6 bewirkt somit eine Stabilisierung des Kunststoffmaterials und gewährleistet eine Paßgenauigkeit der Innenwandfläche 3, obwohl diese aus Kunststoffmaterial besteht, was eine sichere und genaue Arbeitsweise des Drosselorgans sicherstellt. Dadurch, daß auch die Lageröffnungen 4 durch die gleichfalls einen Teil des Einlegeteils 6 bildenden Ringteile 11 verstärkt werden, wird erreicht, daß sich auch die Lagerstellen für das Drosselorgan beispielsweise durch wechselnde Temperatureinflüsse nicht verändern, so daß die Lagerposition beibehalten bleibt und Verformungen, die beispielsweise zu einem Verklemmen des Drosselorgans führen, verhindert werden. Das Einlegeteil 6 wird vor Herstellung des Drosselklappengehäuses in eine Spritzgußform eingelegt und dort in geeigneter Weise gehaltert. Nach dem Entformen ist eine Nachbearbeitung des Drosselklappengehäuses nicht erforderlich.

## Patentansprüche

1. Aus Kunststoff bestehender, insbesondere im Spritzgußverfahren hergestellter Formkörper, beispielsweise Drosselklappengehäuse (1), mit einer Wandung (15), die mit einer Innenwandflache (3) einen Hohlraum (2) begrenzt, wobei in der Wandung (15) ein zumindest an der dem Hohlraum (2) zugewandten Innenwandfläche (3) vom Kunststoffmaterial bedecktes metallenes Einlegeteil (6) angeordnet ist, dadurch gekennzeichnet, daß das Einlegeteil (6) aus einem Blech mit einer oberen Blechebene (20) und einer unteren Blechebene (21) geformt ist, wobei der Hohlraum (2) eine Längsachse (16) hat, die die Blechebenen schneidet.

2. Formkörper nach Anspruch 1, dadurch gekennzeichnet, daß das in der Wandung (15) angeordnete Einlegeteil (6) mit seiner oberen (20) und unteren Blechebene (21) gegenüber einer senkrecht zur Längsachse (16) gerichteten Normalebene (17) geneigt unter einem Neigungswinkel β verläuft.

3. Formkörper nach Anspruch 2, dadurch gekennzeichnet, daß der Neigungswinkel β der oberen (20) und unteren Blechebene (21) des Einlegeteils (6) gegenüber der Normalebene (17) zwischen etwa 4° und 8° beträgt.

4. Formkörper nach einem der Ansprüche 2 oder 3, dadurch gekennzeichnet, daß die obere (20) und untere Blechebene (21) des Einlegeteiles (6) derart gegenüber der Normalebene (17) geneigt sind, daß das Einlegeteil (6) zu einer im Hohlraum (2) angeordneten schwenkbaren Drosselklappe (18), die zur Leistungssteuerung einer Brennkraftmaschine dient, in deren Leerlaufstellung fluchtend verläuft.

5. Formkörper nach einem der Ansprüche 1 bis 4, dadurch gekennzeichnet, daß das Einlegeteil (6) wenigstens einen Abschnitt (7, 11) hat, der aus einer Blechebene (20, 21) herausgebogen ist.

6. Formkörper nach einem der Ansprüche 1 bis 5, dadurch gekennzeichnet, daß das Einlegeteil (6) mit Verformungen, insbesondere mit diesen durchsetzenden Öffnungen (12) versehen ist.

7. Formkörper nach einem der Ansprüche 1 bis 6, dadurch gekennzeichnet, daß das Einlegeteil (6) mit Ansätzen (10) versehen ist.

8. Formkörper nach Anspruch 5, dadurch gekennzeichnet, daß die Abschnitte des Einlegeteils (6) von Ringteilen (11) gebildet sind, die im Bereich von Öffnungen, insbesondere Lageröffnungen (4) konzentrisch zu diesen in das Kunststoffmaterial eingebettet sind.

9. Formkörper nach Anspruch 5 oder 7, dadurch gekennzeichnet, daß die Abschnitte (7, 11) und/oder die Ansätze (10) Öffnungen (9, 9') aufweisen.

10. Formkörper nach Anspruch 9, dadurch gekennzeichnet, daß die Öffnungen (9') als Gewindeöffnungen ausgebildet sind.

## Claims

1. Moulding consisting of plastic, in particular produced by the injection-moulding process, for example a throttle-valve housing (1), having a wall (15) which with an inner wall surface (3) bounds a cavity (2), in the wall (15) there being arranged a metallic insert (6), covered by plastic material at least on the inner wall surface (3) facing the cavity (2), characterized in that the insert (6) is shaped from a metal sheet having an upper sheet plane (20) and a lower sheet plane (21), the cavity (2) having a longitudinal axis (16) which intersects the sheet planes.

2. Moulding according to Claim 1, characterized in that the insert (6) which is arranged in the wall (15) is inclined with its upper sheet plane (20) and lower sheet plane (21) at an angle of inclination β with respect to a normal plane (17) directed perpendicularly to the longitudinal axis (16).

3. Moulding according to Claim 2, characterized in that the angle of inclination β of the upper sheet plane (20) and lower sheet plane (21) of the insert (6) is between about 4° and 8° with respect to the normal plane (17).

4. Moulding according to one of Claims 2 or 3, characterized in that the upper sheet plane (20) and lower sheet plane (21) of the insert (6) are inclined with respect to the normal plane (17) in such a way that the insert (6) runs in alignment with a swivelling throttle valve (18) which is arranged in the cavity (2) and serves for controlling the power of an internal-combustion engine in the idling position of the said throttle valve.

5. Moulding according to one of Claims 1 to 4, characterized in that the insert (6) has at least one section (7, 11) which is bent out from a sheet plane (20, 21).

6. Moulding according to one of Claims 1 to 5, characterized in that the insert (6) is provided with deformations, in particular with openings (12) penetrating them.

7. Moulding according to one of Claims 1 to 6, characterized in that the insert (6) is provided with attachments (10).

8. Moulding according to Claim 5, characterized in that the sections of the insert (6) are formed by annular parts (11) which are embedded in the plastic material in the region of openings, in particular bearing openings, (4) concentrically with respect to the said openings.

9. Moulding according to Claim 5 or 7, characterized in that the sections (7, 11) and/or the attachments (10) have openings (9, 9').

10. Moulding according to Claim 9, characterized in that the openings (9') are designed as threaded openings.

## Revendications

1. Pièce moulée en matière plastique notamment fabriquée par injection, telle que le boîtier (1) d'un volet d'étranglement comprenant une paroi (15) dont la surface intérieure (3) délimite une cavité (2), la paroi (15) comportant un insert métallique (6) recouvert de matière plastique, au moins sur sa surface intérieure (3) tournée vers la cavité (2),
caractérisée en ce que
l'insert (6) est formé en tôle avec un plan supérieur (20) et un plan inférieur (21), la cavité (2) ayant un axe longitudinal (16) coupant le plan de la tôle.

2. Pièce moulée selon la revendication 1,
caractérisée en ce que
la paroi (15) est munie d'un insert (6) dont le plan supérieur (20) et le plan inférieur (21) sont inclinés d'un angle d'inclinaison β par rapport à un plan (17) normal, perpendiculaire à l'axe longitudinal (16).

3. Pièce moulée selon la revendication 2,
caractérisée en ce que
l'angle d'inclinaison β du plan de tôle supérieur (20) et inférieur (21) de l'insert (6) est compris entre environ 4° et 8° par rapport au plan normal (17).

4. Pièce moulée selon l'une des revendications 2 ou 3,
caractérisée en ce que
le plan de tôle supérieur (20) et inférieur (21) de l'insert (6) est incliné par rapport au plan normal (17) pour que l'insert (6) soit aligné sur le papillon d'étranglement (18) monté basculant dans la cavité (2), et servant à la commande de la puissance du moteur à combustion interne, l'alignement correspondant à la position du papillon d'étranglement pour le mode de ralenti.

5. Pièce moulée selon l'une des revendications 1 à 4,
caractérisée en ce que
l'insert (6) comporte au moins un segment (7, 11) dégagé par rapport à un plan de tôle (20, 21).

6. Pièce moulée selon l'une des revendications 1 à 5,
caractérisée en ce que
l'insert (6) est muni de déformations notamment d'ouvertures (12) qui le traversent.

7. Pièce moulée selon l'une des revendications 1 à 6,
caractérisée en ce que
l'insert (6) est muni d'épaulements (10).

8. Pièce moulée selon la revendication 5,
caractérisée en ce que
les segments de l'insert (6) sont formés par des pièces annulaires (11) dans la zone des ouvertures, notamment des ouvertures de palier (4) de manière concentrique par rapport à celles-ci, pour être intégrées dans la matière plastique.

9. Pièce moulée selon les revendications 5 ou 7,
caractérisée en ce que
les pattes (7, 11) et/ou les prolongements (10) comportent des ouvertures (9, 9').

10. Pièce moulée selon la revendication 9,
caractérisée en ce que
les ouvertures (9') sont taraudées.
